# EUROPEAN PATENT APPLICATION

(11) **EP 2 878 985 A2**
(43) Date of publication of application: **03.06.2015**
(21) Application number: 14192330.0
(22) Date of filing: 07.11.2014
(51) Int. Cl.: G02B 19/00, G03B 21/20, H04N 9/31

(54) **Light source device and projector**

(30) Priority: 07.11.2013 JP 2013231501; 07.11.2013 JP 2013231502
(71) Applicant: Seiko Epson Corporation, Shinjuku-ku Tokyo (JP)
(72) Inventor: Akiyama, Koichi, Suwa-shi, Nagano 392-8502 (JP)
(74) Representative: Miller Sturt Kenyon

(57) **Abstract**

A light source device (3) includes a plurality of light sources (2a) arranged in a first direction, a first cylindrical lens (8), which light beams from the plurality of light sources enter, and a lens unit (9), which light beams from the first cylindrical lens enter. A generating line of the first cylindrical lens is parallel to the first direction. The lens unit is provided with a plurality of cylindrical lenses (12) disposed so as to correspond respectively to the plurality of light sources, and a generating line of each of the plurality of cylindrical lenses intersects with the first direction. An arrangement of a second cylindrical lens included in the plurality of the cylindrical lenses is determined independently of the adjacent one of the cylindrical lenses.

## Description

### BACKGROUND

### 1. Technical Field

The present invention relates to a light source device and a projector.

### 2. Related Art

Projectors are devices for modulating light emitted from a light source section in accordance with image information using a light modulation device, and then projecting the image thus obtained in an enlarged manner using a projection lens. In recent years, a laser source such as a semiconductor laser (LD) with which high-intensity and high-power light can be obtained attracts attention as a light source of a light source device used for such a projector.

In the past, in the projector provided with the light source device constituted by such a laser source as described above, there has been used a collimator lens array having a plurality of spherical lenses arranged in an array (see, e.g., JP-A-2012-118220).

However, in the related art described above, there has been a problem that in the case in which a position of either of the plurality of light sources constituting the array light source is shifted from a predetermined position, optical axis alignment between each of the light sources and the corresponding one of the collimator lenses becomes difficult.

### SUMMARY

An advantage of some aspects of the invention is to provide a light source device and a projector capable of easily achieving the optical axis alignment.

According to a first aspect of the invention, there is provided a light source device including a plurality of light sources arranged in a first direction, a first cylindrical lens, which light beams from the plurality of light sources enter, a lens unit, which light beams from the first cylindrical lens enter, a support member adapted to support the lens unit, and a guide section provided to the support member, wherein a generating line of the first cylindrical lens is parallel to the first direction, the lens unit is provided with a plurality of cylindrical lenses disposed so as to correspond respectively to the plurality of light sources, a generating line of each of the plurality of cylindrical lenses intersects with the first direction, the plurality of light sources includes a first light emitting element, the plurality of cylindrical lenses includes a second cylindrical lens corresponding to the first light emitting element, and the second cylindrical lens is disposed so as to correspond to an arrangement of the first light emitting element independently of one of the plurality of cylindrical lenses adjacent to the second cylindrical lens.

According to the configuration of the light source device related to the first aspect of the invention, the light beams emitted from the light sources can be collimated using the first cylindrical lens and the second cylindrical lens. Further, by moving the second cylindrical lens in the first direction, the optical axis alignment with the light sources can be achieved. Therefore, the optical axis alignment with respect to each of the plurality of light sources can easily and surely be achieved.

The first aspect of the invention described above may be configured such that a maximum radiation angle direction of the light beam emitted from each of the light sources intersects with the first direction.

According to this configuration, the distance between the light sources in the first direction can be shortened. Therefore, the first cylindrical lens can be miniaturized.

The first aspect of the invention described above may be configured such that the second cylindrical lens has a first flat surface perpendicular to a lens surface of the second cylindrical lens, and the second cylindrical lens is supported by the support member via the first flat surface.

According to this configuration, the second cylindrical lens can easily be moved with respect to the support member in the alignment process.

The first aspect of the invention described above may be configured such that the second cylindrical lens has a second flat surface opposed to the lens surface of the second cylindrical lens, and the second flat surface has contact with the guide section.

According to this configuration, since the second flat surface moves along the guide section, the second cylindrical lens can easily be translated. Therefore, it is possible to achieve the alignment of the second cylindrical lens while keeping the incident angles of the light beams to the second cylindrical lens constant.

In this case, it is preferable to adopt a configuration in which the second flat surface is opposed to the first cylindrical lens.

According to this configuration, the second cylindrical lens and the first cylindrical lens are disposed so as to be opposed to each other in a state of being separated by a predetermined distance using the guide section. Therefore, the second cylindrical lens and the first cylindrical lens can be prevented from having contact with each other.

The first aspect of the invention described above may be configured such that the guide section defines a distance between the first cylindrical lens and the lens unit.

According to this configuration, the guide section can be made to function as a spacer between the first cylindrical lens and the second cylindrical lens.

The first aspect of the invention described above may be configured such that the light source device further includes a first plane adapted to support the plurality of light sources, and the generating line of the first cylindrical lens is parallel to the first plane.

According to this configuration, the optical axis alignment between the plurality of light sources and the first cylindrical lens can easily be achieved.

In this case, it is preferable to adopt a configuration in which the support member has a second plane adapted to support the lens unit, and the first plane is parallel to the second plane.

According to this configuration, the alignment between the plurality of light sources and the lens unit can easily be achieved.

According to a second aspect of the invention, there is provided a projector including an illumination device adapted to emit illumination light, a light modulation device adapted to modulate the illumination light in accordance with image information to form image light, and a projection optical system adapted to project the image light, wherein the light source device according to the first aspect of the invention is used as the illumination device.

According to the projector related to the second aspect of the invention, since the light source device described above is provided, the projector itself can easily perform the optical axis alignment.

### BRIEF DESCRIPTION OF THE DRAWINGS

Embodiments of the invention will now be described by way of example only with reference to the accompanying drawings, wherein like numbers reference like elements.
Fig. 1 is a plan view showing a schematic configuration of a projector according to an embodiment of the invention.
Fig. 2 is a plan view showing a schematic configuration of an illumination device according to the embodiment.
Figs. 3A and 3B are diagrams showing a configuration of an essential part of a semiconductor laser.
Figs. 4A and 4B are diagrams showing a detailed configuration of a collimating optical system.
Fig. 5 is an explanatory diagram of an alignment operation of an optical axis in the collimating optical system.
Fig. 6 is a plan view showing a schematic configuration of a projector according to an embodiment of the invention.
Fig. 7 is a plan view showing a schematic configuration of an illumination device according to the embodiment.
Figs. 8A and 8B are diagrams showing a detailed configuration of a collimating optical system.
Figs. 9A and 9B are explanatory diagrams of an action of the collimating optical system.
Figs. 10A and 10B are explanatory diagrams of an action process of the collimating optical system.
Figs. 11A and 11B are diagrams showing a configuration of a collimating optical system according to a modified example.

### DESCRIPTION OF EXEMPLARY EMBODIMENTS

Some embodiments of the invention will hereinafter be described in detail with reference to the accompanying drawings.

It should be noted that the drawings used in the following explanation show characteristic parts in an enlarged manner in some cases for the sake of convenience of easier understanding of the characteristics, and the dimensional ratios between the constituents and so on are not necessarily the same as actual ones.

### First Embodiment

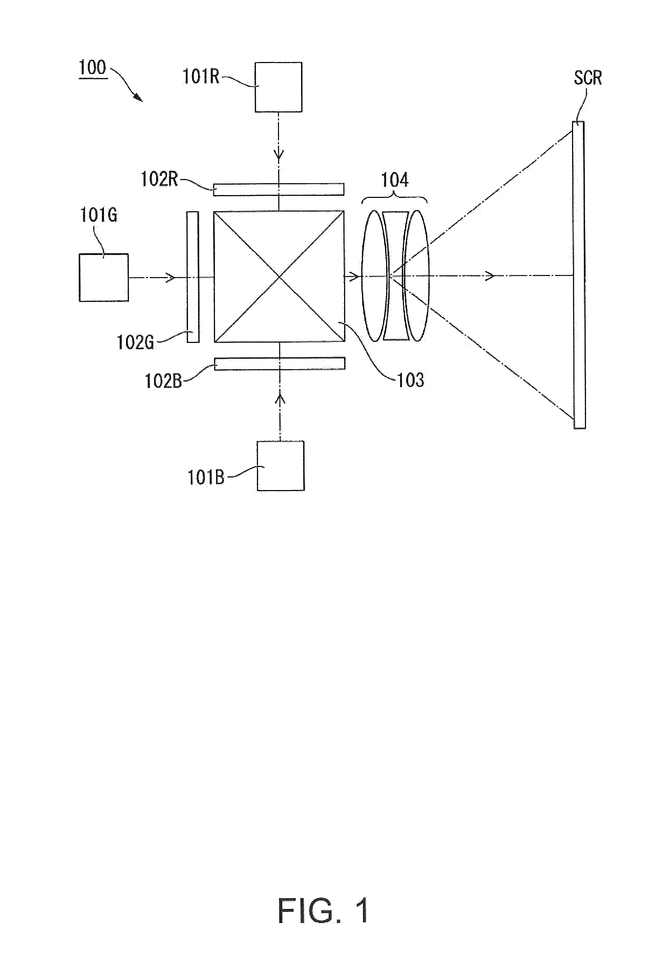

Fig. 1 is a plan view showing a schematic configuration of a projector 100 according to the present embodiment. The projector 100 is a projection-type image display device for displaying a color image (an image) on a screen SCR. Further, a laser source such as a semiconductor laser (LD) with which high-intensity and high-power light can be obtained is used as a light source of illumination devices provided to the projector 100.

The projector 100 is provided with the illumination devices 101R, 101G, and 101B, light modulation devices 102R, 102G, and 102B, a combining optical system 103, and a projection optical system 104.

The illumination devices 101R, 101G, and 101B respectively emit laser beams (illumination light beams) corresponding respectively to the colors of red (R), green (G), and blue (B).

The illumination devices 101R, 101G, and 101B have basically the same configuration as each other except the point that the illumination devices are respectively provided with the semiconductor lasers corresponding respectively to the colors of red (R), green (G), and blue (B) as the light sources as described later. Further, the illumination devices 101R, 101G, and 101B emit the illumination light beams toward the respective light modulation devices 102R, 102G, and 102B.

The light modulation devices 102R, 102G, and 102B respectively modulate the laser beams from the illumination devices 101R, 101G, and 101B in accordance with an image signal to form image light beams corresponding to the respective colors.

The light modulation devices 102R, 102G, and 102B are each formed of a liquid crystal light valve (a liquid crystal panel), and each form the image light obtained by modulating the illumination light beams corresponding to the respective colors in accordance with image information. It should be noted that on the entrance side and the exit side of each of the light modulation devices 102R, 102G, and 102B, there are disposed polarization plates (not shown) so as to transmit only linearly-polarized light having a specific direction (e.g., S polarized light).

The combining optical system 103 combines the image light beams from the respective light modulation devices 102R, 102G, and 102B.

The combining optical system 103 is formed of a cross dichroic prism, and the image light beams from the respective light modulation devices 102R, 102G, and 102B enter the combining optical system 103. The combining optical system 103 combines the image light beams corresponding to the respective colors, and emits the image light beam thus combined toward the projection optical system 104.

The projection optical system 104 is formed of a projection lens group, and projects the image light beam combined by the combining optical system 103 toward the screen SCR in an enlarged manner. Thus, a color picture thus enlarged is displayed on the screen SCR.

The illumination devices 101R, 101G, and 101B have basically the same configuration as each other except the point that the illumination devices are respectively provided with the semiconductor lasers (the light sources) corresponding to the respective colors of red (R), green (G), and blue (B) as the light sources as described above. Therefore, in the following explanation, the illumination device 101R is cited as an example, and the configuration thereof will be explained while the detained explanation of the illumination devices 101G, 101B will be omitted.

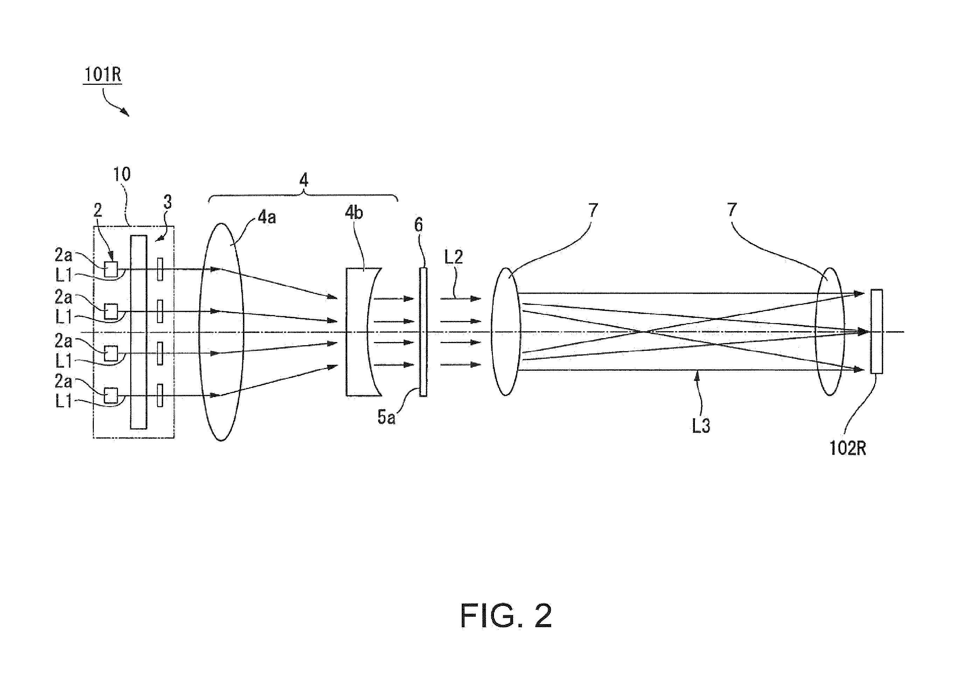

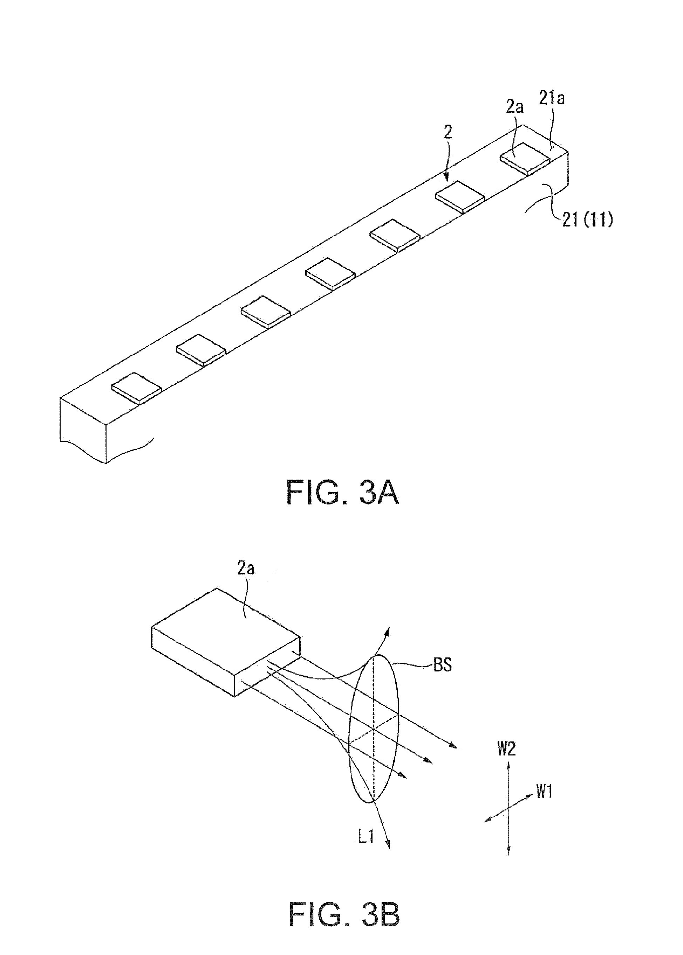

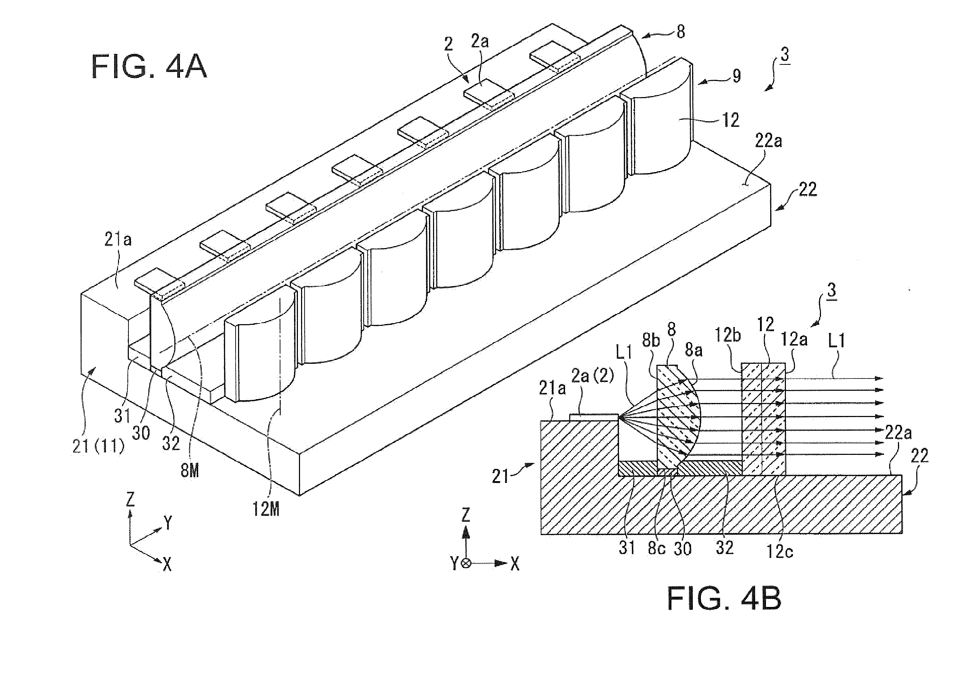

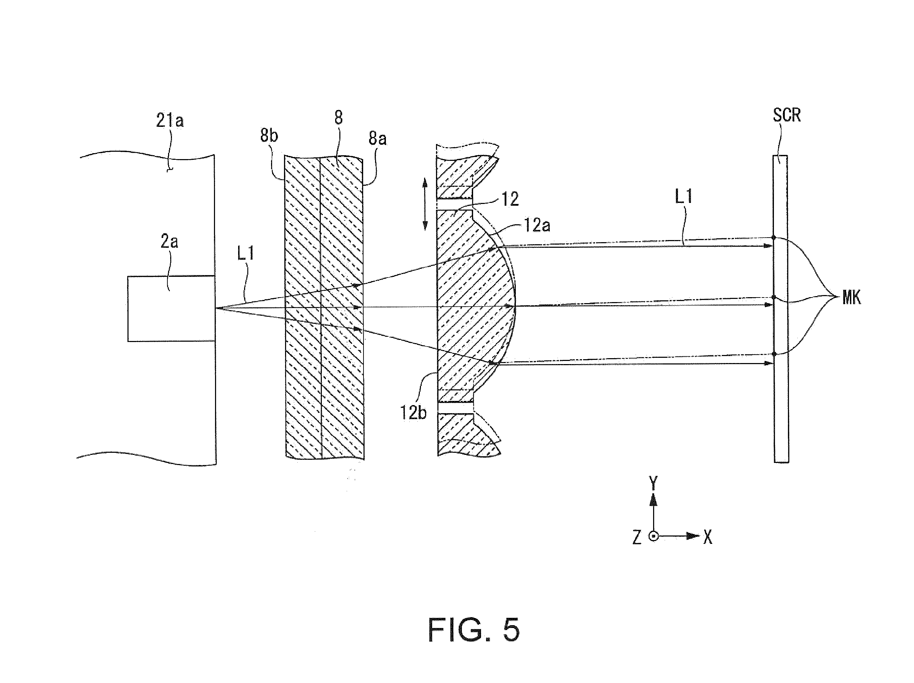

Fig. 2 is a plan view showing a schematic configuration of the illumination device 101R, and Figs. 3A and 3B are diagrams showing a configuration of an essential part of the semiconductor laser for emitting the laser beam in the illumination device. Figs. 4A and 4B are diagrams showing a detailed configuration of the collimating optical system in the illumination device 101R, and Fig. 5 is a diagram for explaining the alignment of the optical axis in the collimating optical system.

As shown in Fig. 2, the illumination device 101R is provided with a light source unit 10, an afocal optical system 4, a diffractive-optical element 6, and an overlapping optical system 7.

The light source unit 10 includes an array light source 2 including a plurality of solid-state light sources 2a, and a collimator optical system 3 for converting light beams L1, which are emitted from the respective solid-state light sources 2a and then enter the collimator optical system 3, into parallel light.

The afocal optical system 4 adjusts the size (spot diameter) of the parallel light converted by the collimator optical system 3. The diffractive-optical element 6 makes diffracted light L2 enter the overlapping optical system 7, and the light modulation device 102R is irradiated with light L3 overlapped by the overlapping optical system 7 as the illumination light.

As shown in Fig. 3A, in the array light source 2, a plurality of solid-state light sources 2a are arranged in a line on an upper surface (a first plane) 21a of a first base 21. It should be noted that Fig. 3A shows the state in which a plurality of (e.g., seven) solid-state light sources 2a is disposed on the first base 21 of a base section 11 described later.

As shown in Fig. 3B, the solid-state light sources 2a are each a semiconductor laser having an elongated rectangular shape having a longitudinal direction W1 and a short-side direction W2 viewed from an optical axis direction of the light to be emitted. The solid-state light sources 2a each emit the red light beam (linearly-polarized light) L1 having a polarization direction parallel to the longitudinal direction W1. The spread of the light beam L1 in the short-side direction W2 is larger than the spread of the light beam L1 in the longitudinal direction W1. Therefore, the cross-sectional shape BS of the light beam L1 becomes a rectangular shape or an elliptical shape with the longitudinal direction of W2. In other words, the maximum radiation angle direction of the light beam L1 emitted from each of the solid-state light sources 2a can be defined by the short-side direction W2. In the case of the present embodiment, the width in the longitudinal direction W1 of each of the solid-state light sources 2a is, for example, 18 µm, and the width in the short-side direction W2 of each of the solid-state light sources 2a is, for example, 2 µm, but the shape of each of the solid-state light sources 2a is not limited thereto.

It should be noted that in the illumination device 101G, each of the solid-state light sources 2a emits the green light beam (linearly-polarized light) to the light incident surface of the respective collimator optical system 3, and in the illumination device 101B, each of the solid-state light sources 2a emits the blue light beam (linearly-polarized light) to the light incident surface of the respective collimator optical system 3.

In the present embodiment, the light source unit 10 has the array light source 2 and the collimator optical system 3, and the base section (support member) 11 for holding the array light source 2 and the collimator optical system 3 as shown in Figs. 4A and 4B. Hereinafter, in the explanation using Figs. 4A, 4B, and 5, the explanation will be presented using the XYZ coordinate system. In Figs. 4A, 4B, and 5, the X direction defines the direction of the optical axis of the light beam L1 emitted from each of the solid-state light sources 2a, the Y direction defines an arrangement direction of the plurality of solid-state light sources 2a, and the Z direction defines a direction perpendicular to the X and Y directions, and a vertical direction.

As shown in Figs. 4A and 4B, the base section 11 includes the first base 21 and a second base 22. The first base 21 is formed integrally with the second base 22. The upper surface (the first plane) 21a of the first base 21 and the upper surface (a second plane) 22a of the second base 22 are parallel to the Y-X plane defining the horizontal plane. In other words, the upper surface 21a and the upper surface 22a are parallel to each other, and the upper surface 21a is disposed at a level higher than the level of the upper surface 22a. The first base 21 is designed so that the optical axes of the light beams L1 emitted from the respective solid-state light sources 2a disposed on the upper surface 21a intersect with a generating line 8M (or a longitudinal axis) of an anterior cylindrical lens 8 described later.

The plurality of solid-state light sources 2a is arranged on the upper surface 21a of the first base 21 along the Y direction (the first direction) in the state in which the laser emission surfaces are set parallel to the Y-Z plane. In other words, in the present embodiment, the light emitting areas of the respective solid-state light sources 2a are arranged along the Y direction.

In the present embodiment, the maximum radiation angle direction (the short-side direction W2 shown in Fig. 3B) of the light beam L1 emitted from each of the solid-state light sources 2a is set to the Z direction perpendicular to (intersecting with) the Y direction which is the arrangement direction (the first direction) of the solid-state light sources 2a.

The collimator optical system 3 includes the anterior cylindrical lens (a first cylindrical lens) 8 and a lens unit 9. The anterior cylindrical lens 8 and the lens unit 9 are fixed to the upper surface 22a of the second base 22 with an adhesive.

The anterior cylindrical lens 8 has the generating line 8M along the Y direction, a cylindrical surface (a lens surface) 8a having a convex shape, and a flat rear surface 8b. In other words, the generating line 8M of the anterior cylindrical lens 8 is parallel to the upper surface 21a of the first base 21 on which the plurality of solid-state light sources 2a is disposed.

The anterior cylindrical lens 8 is disposed so that the rear surface 8b (a rear surface) faces the light emitting areas of the respective solid-state light sources 2a. In the present embodiment, the anterior cylindrical lens 8 has the side surface formed to be a flat installation surface 8c, and by fixing the installation surface 8c to the upper surface 22a of the second base 22, the rear surface 8b is disposed along the vertical direction. Although in the present embodiment, a spacer member 30 is disposed between the installation surface 8c and the upper surface 22a, the spacer member 30 is not necessarily required to be disposed. By disposing the spacer member 30, it is possible to adjust the height of the anterior cylindrical lens 8 so that the optical axes of the light beams L1 intersect with the generating line 8M of the anterior cylindrical lens 8.

Based on such a configuration, the anterior cylindrical lens 8 exerts a lens effect only in the Z-X plane perpendicular to the generating line to thereby collimate the light beams L1 in the Z-X plane.

Meanwhile, the lens unit 9 includes a plurality of cylindrical lenses (second cylindrical lenses) 12. The number of the cylindrical lenses 12 included in the lens unit 9 corresponds to the number of the solid-state light sources 2a. The cylindrical lenses 12 are each arranged independently of other cylindrical lenses 12 adjacent to each other so as to correspond to the arrangement of the solid-state light sources 2a.

The cylindrical lenses 12 are each disposed so that the generating line 12M (or longitudinal axis) intersects with the generating line direction (the Y direction) of the anterior cylindrical lens 8. In the present embodiment, the generating lines 12M are perpendicular to the generating line direction of the anterior cylindrical lens 8. In other words, the cylindrical lenses 12 each have the generating line along the Z direction, a cylindrical surface (a lens surface) 12a having a convex shape, and a flat surface (a second flat surface) 12b. The cylindrical lenses 12 are each disposed so that the flat surface 12b (a rear surface) faces the cylindrical surface 8a of the anterior cylindrical lens 8. In the present embodiment, the cylindrical lenses 12 each have a side surface formed to be a flat installation surface (a first flat surface) 12c, and by fixing the installation surface 12c to the upper surface 22a of the second base 22, the flat surface 12b is disposed along the vertical direction.

Based on such a configuration, the cylindrical lenses 12 each exert a lens effect only in the X-Y plane perpendicular to the generating lines to thereby collimate the light beam L1 in the X-Y plane.

In the present embodiment, the anterior cylindrical lens 8 is fixed to the upper surface 22a with an adhesive in the state in which the distance from the first base 21 (the solid-state light sources 2a) is held in a predetermined distance via a spacer member 31. The spacer member 31 is disposed on the upper surface 22a of the second base 22, and between a side surface of the first base 21 and the rear surface 8b of the anterior cylindrical lens 8.

Further, the cylindrical lenses 12 are fixed to the upper surface 22a with an adhesive in the state in which the distance from the anterior cylindrical lens 8 is held in a predetermined distance via a spacer member 32. It should be noted that the cylindrical lenses 12 are fixed with the adhesive in the state in which an alignment described later to the optical axes of the solid-state light sources 2a has been performed.

As described above, the light source unit 10 according to the present embodiment is capable of converting the light beams L1 emitted from the respective solid-state light sources 2a into the parallel light beam using the collimator optical system 3 including two types of cylindrical lenses.

Then, an assembling method of the light source unit 10 will be explained.

Firstly, the base section 11 having the plurality of solid-state light sources 2a (the array light source 2) disposed on the upper surface 21a of the first base 21 is prepared. Subsequently, the anterior cylindrical lens 8 and the lens unit 9 are tentatively disposed on the upper surface 22a of the second base 22 of the base section 11. On this occasion, the spacer members 30, 31, and 32 are also disposed together therewith.

The thickness of the spacer member 30 is adjusted so that the optical axes of the light beams L1 emitted from the solid-state light sources 2a and the anterior cylindrical lens 8 have a predetermined positional relationship. For example, the thickness of the spacer member 30 is adjusted so that the optical axes of the light beams L1 emitted from the solid-state light sources 2a intersect with the generating line 8M. In the present embodiment, since the generating line 8M of the anterior cylindrical lens 8 is parallel to the upper surface 21a of the first base 21, the optical axis alignment between the plurality of solid-state light sources 2a and the anterior cylindrical lens 8 is easy.

By pressing a lens holding member against cylindrical surfaces 12a of the cylindrical lenses 12 with screws via a biasing member such as a spring in this state, there is created a state in which the anterior cylindrical lens 8 and the cylindrical lenses 12 do not tilt.

Here, since the anterior cylindrical lens 8 exerts the lens effect only in the X-Z plane, it is not necessary to consider the alignment with respect to the solid-state light sources 2a in the Y direction. Further, in the present embodiment, the distance between the anterior cylindrical lens 8 and the solid-state light sources 2a is held in a predetermined distance via the spacer member 31. Therefore, the anterior cylindrical lens 8 is guided in the Z direction in the state of having contact with the spacer member (a guide member) 31 in the adjustment process. Therefore, in the alignment of the anterior cylindrical lens 8 with respect to the solid-state light sources 2a, it is sufficient to consider only one direction (the Z direction), and therefore, the alignment becomes simple and easy. Although in the present embodiment, the spacer member 31 is used as a guide section when moving the anterior cylindrical lens 8, the invention is not limited to this configuration, but a wall or a ridge-like section disposed on the upper surface 22a can also be used as the guide.

After the alignment of the anterior cylindrical lens 8, a UV-cure adhesive is made to infiltrate the gaps between the spacer members 30, 31, and 32, the anterior cylindrical lens 8, and the cylindrical lenses 12, and the base section 11.

Subsequently, by moving each of the cylindrical lenses 12 in the horizontal direction independently of each other using a tool such as tweezers, the adjustment is performed so that the spots of the light beams L1, which are emitted from the solid-state light sources 2a, and then transmitted through the anterior cylindrical lens 8, are set at predetermined positions.

For example, the cylindrical lenses 12 are each moved in the horizontal direction (the Y direction) on the upper surface 22a of the second base 22 while irradiating the screen SCR with the light beams L1 having passed through the cylindrical lenses 12. The cylindrical lenses 12 each have the installation surface 12c formed as a flat surface, and are therefore easily moved with respect to the upper surface 22a. In the present embodiment, since the base section 11 is formed so that the upper surface 22a of the second base 22 and the upper surface 21a of the first base 21 are arranged to be parallel to each other, the alignment between the plurality of solid-state light sources 2a and the corresponding cylindrical lenses 12 can easily be achieved.

On this occasion, as shown in plan view in Fig. 5, the spots of the light beams L1 move on the screen SCR. For example, by comparing the spots of the light beams L1 with aligning marks MK marked on the screen SCR, the alignment of the cylindrical lenses 12 to the corresponding solid-state light sources 2a can be performed. For example, the cylindrical lenses 12 are adjusted to positions where the light beams L1 emitted from the cylindrical surfaces 12a are converted into the parallel light along the X direction.

Here, since the cylindrical lenses 12 each exert the lens effect only in the X-Y plane, it is not necessary to consider the alignment with respect to the solid-state light sources 2a in the Z direction. Further, in the present embodiment, the distance between the cylindrical lenses 12 and the anterior cylindrical lens 8 is held in a predetermined distance via the spacer member 32. Therefore, the cylindrical lenses 12 are each guided smoothly in the state in which the flat surface 12b has contact with the spacer member (a guide member) 32 in the adjustment process, and thus the alignment becomes easy. Further, in the alignment process, the spacer member 32 prevents the cylindrical lenses 12 and the anterior cylindrical lens 8 from having contact with each other. Further, it is possible to easily achieve the alignment of the cylindrical lenses 12 while keeping the incident angles of the light beams L1 to the cylindrical lenses 12 constant.

Therefore, in the alignment of the cylindrical lenses 12 with respect to the solid-state light sources 2a, it is sufficient to consider only one direction (the Y direction), and therefore, the alignment becomes simple and easy. Although in the present embodiment, the spacer member 32 is used as a guide section when moving the cylindrical lenses 12, the invention is not limited to this configuration, but a wall or a ridge-like section disposed on the upper surface 22a can also be used as the guide.

After the alignment of the anterior cylindrical lens 8 and the cylindrical lenses 12 with respect to the solid-state light sources 2a is complete in such a manner as described above, irradiation with a UV ray is performed from the above to thereby solidify the adhesive. Subsequently, the lens holding member, the springs, and the screws are removed. It should be noted that the lens holding member can also be bonded to the cylindrical lenses 12 with an adhesive.

In such a manner as described above, assembling of the light source unit 10 according to the present embodiment is complete. It should be noted that projection on a screen can also be used to align the anterior lens 8, although as explained above this is not essential.

Going back to Fig. 2, the afocal optical system 4 is constituted by lenses 4a, 4b. The diffractive-optical element 6 is formed of a computer generated hologram (CGH).

The diffractive-optical element 6 has a function of diffracting the incident light beams L1 to thereby homogenize the intensity distribution of the red light (diffracted light) L1 entering the light modulation device 102R described later, and at the same time, enhance the efficiency of the light L1 entering the light modulation device 102R.

The diffractive-optical element 6 is formed of a surface-relief hologram element having a fine concave-convex structure designed by a computer disposed on a surface of a base material made of a light-transmissive material such as quartz (glass) or synthetic resin. Further, the diffractive-optical element 6 is a wavefront conversion element for converting the wave front of the incident light using the diffraction phenomenon. In particular, in the phase modulating CGH, the wavefront conversion can be performed with only little energy loss of the incident light wave. Therefore, the CGH is capable of generating a uniform intensity distribution or an intensity distribution having a simple shape.

The diffractive element pattern is formed of such a fine concave-convex structure, and has a plurality of recessed sections formed to have rectangular cross-sectional shapes with respective depths different from each other, and protruding sections formed between these recessed sections so as to have rectangular cross-sectional shapes with respective heights different from each other. In the diffractive-optical element 6, by appropriately controlling the design conditions including the widths of the recessed sections and the depths of the recessed sections (the heights of the protruding sections) in the diffractive element pattern, it is possible to provide the diffractive element pattern with a desired diffusion function. Further, as the method of optimizing the setting condition of the diffractive element pattern, there can be cited a computing method such as an iterative Fourier method.

Here, a plurality of light beams emitted from a polarization conversion element 5 enter the diffractive-optical element 6. Therefore, a plurality of primary diffracted light beams is emitted from the diffractive-optical element 6. Further, the principal rays of the primary diffracted light beams are parallel to each other. Therefore, in the invention, it is assumed that a bundle of the plurality of primary diffracted light beams is treated as a single diffracted light beam L2 unless otherwise noted. Further, a direction of the principal ray in the central portion of the diffracted light beam L2 is assumed to be a direction passing through the center of the bundle of the plurality of primary diffracted light beams, and parallel to the principal ray of each of the primary diffracted light beams.

Further, the diffractive-optical element 6 generates a diffracted light distribution having a rectangular light distribution as a whole, and an aspect ratio (a horizontal to vertical ratio) of the light distribution coinciding with an aspect ratio (a horizontal to vertical ratio) of an illumination object (an image forming area of the light modulation device). Thus, it is possible to make the illumination light having a rectangular shape as a whole efficiently enter the image forming area of each of the light modulation devices 102R, 102G, and 102B each having a rectangular shape.

Further, in the diffractive-optical element 6, it is preferable to make the light beams L1 vertically enter an incident surface 5a of the diffractive-optical element 6. The optical axis direction of each of the light beams L1 is perpendicular to the incident surface 5a. Thus, the diffraction optical design of the CGH for obtaining the diffracted light beam L2 described above becomes easy.

According to the illumination device 101R having such a configuration as described above, the optical axis alignment between the collimator optical system 3 and the solid-state light sources 2a can be achieved only by moving each of the cylindrical lenses 12 in the first direction (the direction intersecting with the generating line of the cylindrical lens 12) when performing the optical axis alignment. Therefore, the optical axis alignment with respect to each of the plurality of solid-state light sources 2a can easily and surely be achieved.

Further, the maximum radiation angle direction of the light beam L1 emitted from each of the solid-state light sources 2a is perpendicular to the arrangement direction of the solid-state light sources 2a. Further, the anterior cylindrical lens 8 collimates the light beams L1 in the generating line direction of the cylindrical lenses 12. Therefore, according to the present embodiment, by miniaturizing the cylindrical lenses 12, cost reduction can be achieved.

Further, by using the CGH as the diffractive-optical element 6, the illumination light having more uniform illuminance distribution (brightness) can be generated while decreasing the aberration due to the overlapping optical system 7. Further, it is possible to efficiently irradiate the image forming area of the light modulation device 102R to be the illumination object with such illumination light.

Therefore, by applying the illumination devices 101R, 101G, and 101B to the projector 100, the projector 100 itself becomes capable of performing display superior in image quality while achieving further miniaturization.

In the projector 100 according to the present embodiment, since the illumination light as predetermined linearly-polarized light is emitted from each of the illumination devices 101R, 101G, and 101B, the illumination light can surely be made to enter each of the light modulation devices 102R, 102G, and 102B.

### Second Embodiment

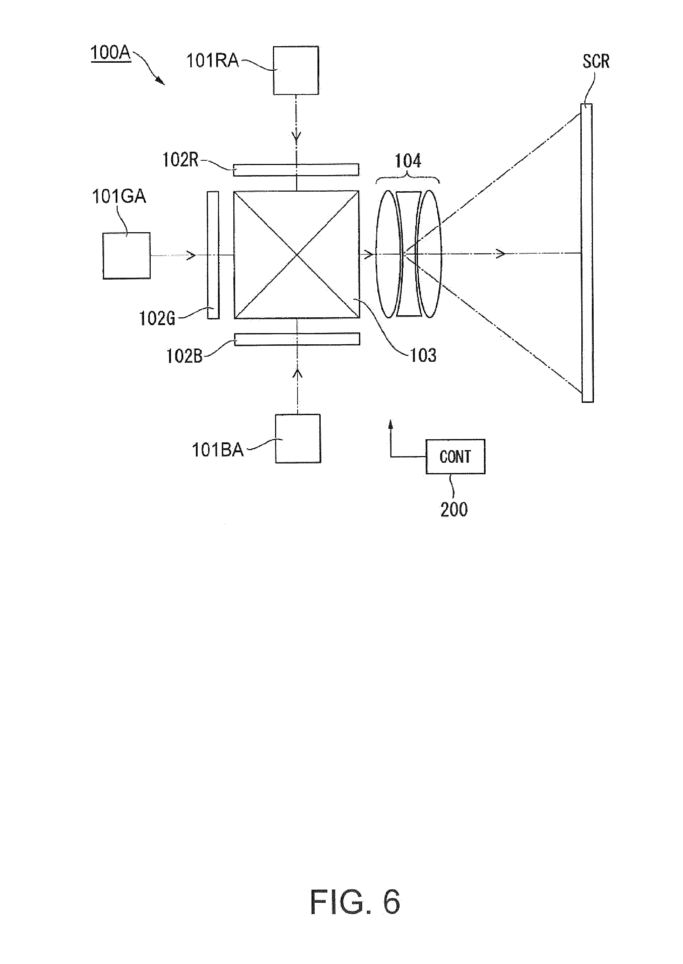

Fig. 6 is a plan view showing a schematic configuration of a projector 100A according to a second embodiment of the invention. The projector 100A is different from the projector 100 according to the first embodiment in the point that a control device (a control section) 200 is provided. It should be noted that in the following explanation, constituents and members the same as those of the first embodiment will be denoted with the same reference symbols, and the detailed explanation thereof will be omitted.

The projector 100A is provided with illumination devices 101RA, 101GA, and 101BA, the light modulation devices 102R, 102G, and 102B, the combining optical system 103, the projection optical system 104, and the control device (the control section) 200.

The illumination devices 101RA, 101GA, and 101BA respectively emit laser beams (illumination light beams) corresponding respectively to the colors of red (R), green (G), and blue (B).

The control device 200 is electrically connected to the illumination devices 101RA, 101GA, and 101BA, and the light modulation devices 102R, 102G, and 102B to control drive of these devices.

The illumination devices 101RA, 101GA, and 101BA have basically the same configuration as each other except the point that the illumination devices are respectively provided with the semiconductor lasers (the light sources) corresponding to the respective colors of red (R), green (G), and blue (B) as the light sources. Therefore, in the following explanation, the illumination device 101RA is cited as an example, and the configuration thereof will be explained while the detained explanation of the illumination devices 101GA, 101BA will be omitted.

The illumination device 101RA is different from the illumination device 101R explained in the description of the first embodiment in the point that the collimator optical system 3 is controlled by the control device 200. Therefore, the explanation will be presented focusing attention to the point in which the illumination device 101RA differs from the illumination device 101R.

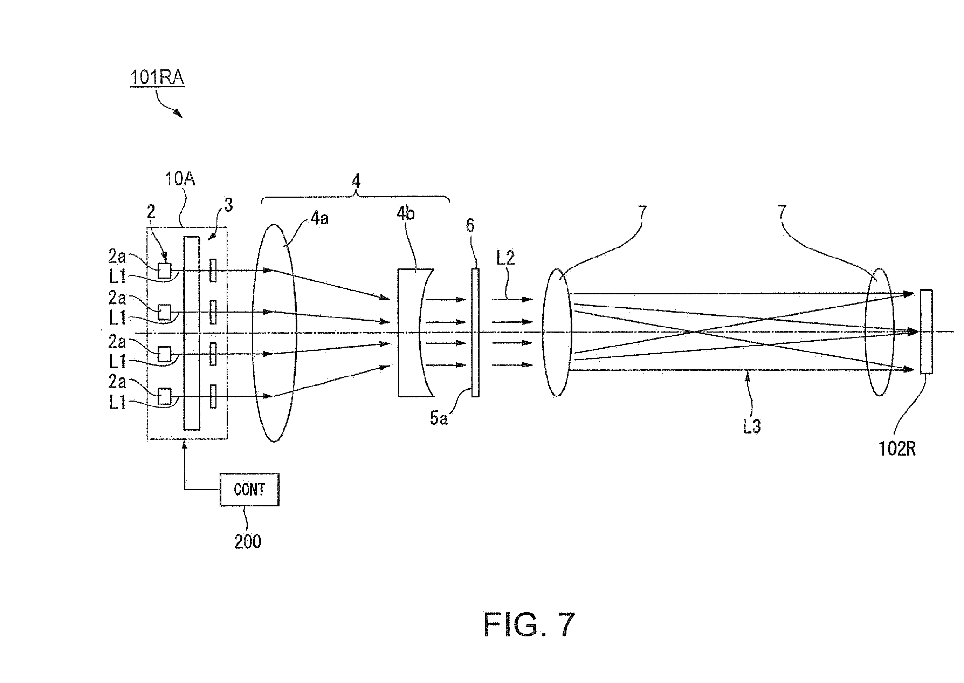

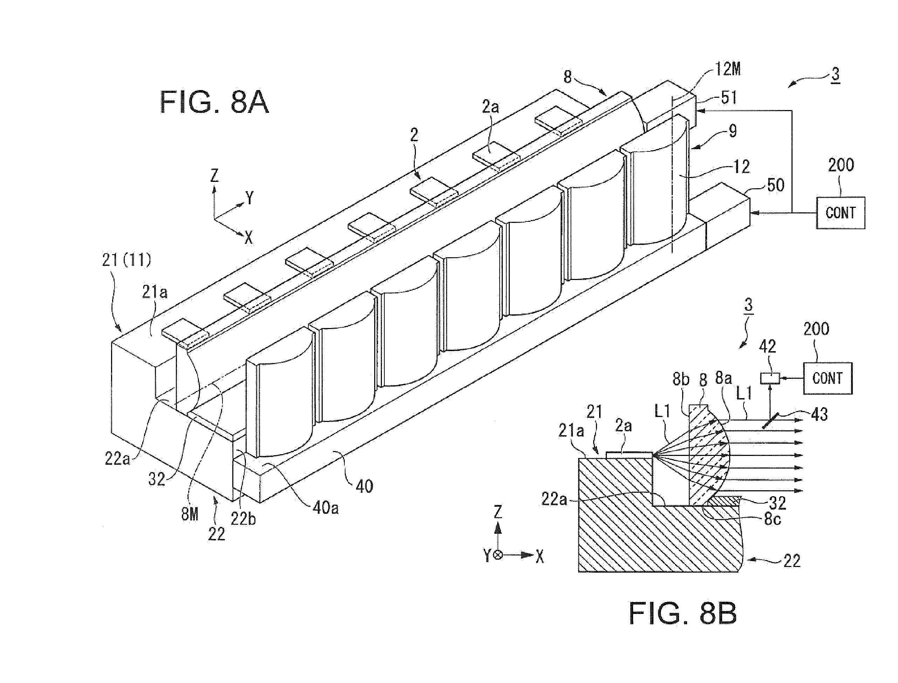

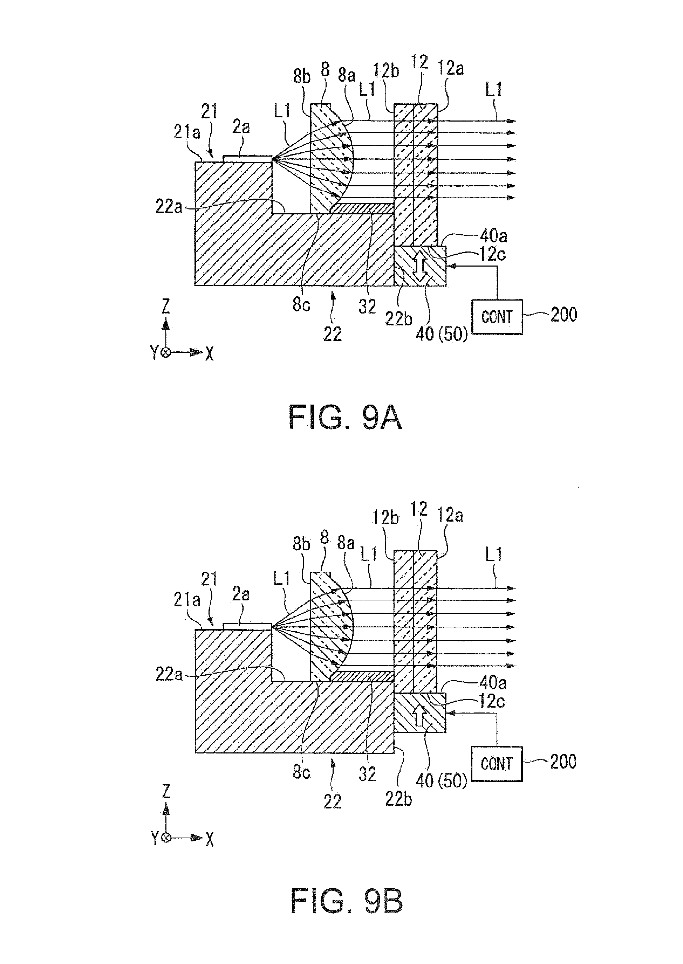

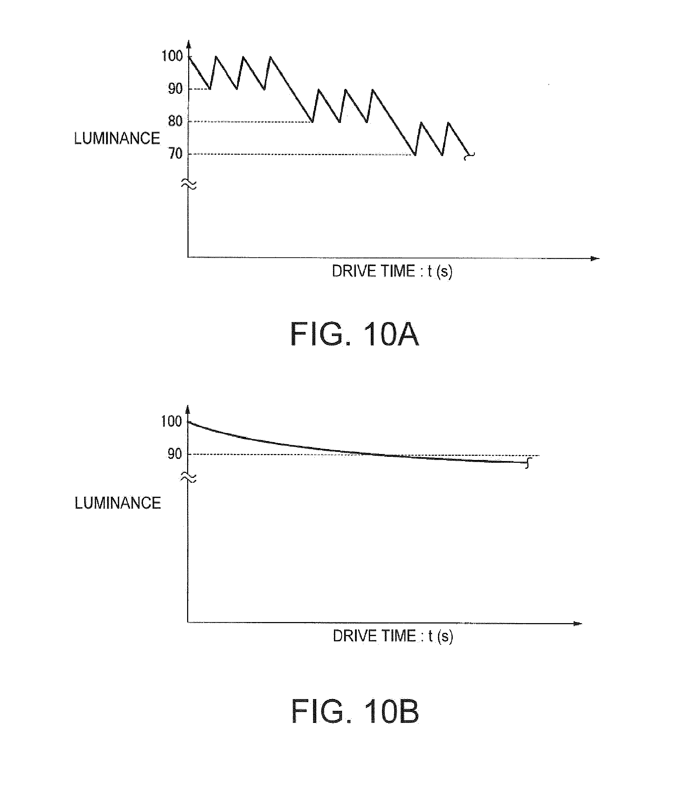

Fig. 7 is a plan view showing a schematic configuration of the illumination device 101RA. Figs. 8A and 8B are diagrams showing a detailed configuration of the collimating optical system in the illumination device 101RA, and Figs. 9A and 9B are explanatory diagrams for explaining a configuration and an operation in the collimating optical system. Further, Figs. 10A and 10B are diagrams for explaining a temporal change of the luminance in the present embodiment. It should be noted that in Figs. 10A and 10B, an initial luminance is assumed to be 100.

As shown in Fig. 7, the illumination device 101RA is provided with a light source unit 10A, the afocal optical system 4, the diffractive-optical element 6, and the overlapping optical system 7.

The light source unit 10A includes the array light source 2 including the plurality of solid-state light sources 2a, and the collimator optical system 3 for converting the light beams L1, which are emitted from the respective solid-state light sources 2a and then enter the collimator optical system 3, into parallel light beams.

In the present embodiment, the light source unit 10A has the array light source 2 and the collimator optical system 3, the base section (a first support member) 11, and an elevating support section (a second support section) 40 as shown in Fig. 8A. Hereinafter, in the explanation using Figs. 8A, 8B, 9A, and 9B, the explanation will be presented using the XYZ coordinate system. In Figs. 8A, 8B, 9A, and 9B, the X direction defines the direction of the optical axis of the light beam L1 emitted from each of the solid-state light sources 2a, the Y direction defines an arrangement direction of the plurality of solid-state light sources 2a, and the Z direction defines a direction perpendicular to the X and Y directions, and a vertical direction.

The collimator optical system 3 includes the anterior cylindrical lens (the first cylindrical lens) 8 and the lens unit 9.

In the present embodiment, the anterior cylindrical lens 8 has the side surface formed to be the flat installation surface 8c, the installation surface 8c is installed on the upper surface 22a of the second base 22. The anterior cylindrical lens 8 is installed on the upper surface 22a in the state in which the distance from the solid-state light sources 2a is held in a predetermined distance via a spacer member not shown. The anterior cylindrical lens 8 is attached with a drive mechanism 51 on one end of the generating line 8M. The drive mechanism 51 is capable of moving the anterior cylindrical lens 8, which is in the state in which the installation surface 8c has contact with the upper surface 22a, along the direction of the generating line 8M. The control device 200 controls drive of the drive mechanism 51.

Based on such a configuration, the anterior cylindrical lens 8 is arranged to be movable along the direction of the generating line 8M. The anterior cylindrical lens 8 moves in the state of being opposed to the solid-state light sources 2a. Further, the rear surface 8b of the anterior cylindrical lens 8 is disposed along the vertical direction.

The cylindrical lenses 12 are each disposed on the elevating support section 40 so that the generating line 12M intersects with the generating line direction (the Y direction) of the anterior cylindrical lens 8. In the present embodiment, the generating line 12M is perpendicular to the direction of the generating line 8M of the anterior cylindrical lens 8. In other words, as shown in Fig. 9A, the cylindrical lenses 12 each have the generating line 12M along the Z direction, a cylindrical surface (a lens surface) 12a having a convex shape, and a flat rear surface 12b.

The anterior cylindrical lens 8 exerts a lens effect only in the Z-X plane perpendicular to the generating line 8M to thereby collimate the light beams L1 in the Z-X plane. The cylindrical lenses 12 each exert a lens effect only in the X-Y plane perpendicular to the generating line 12M to thereby collimate the light beam L1 in the X-Y plane. The cylindrical lenses 12 are installed in the state of being aligned so as to be able to well collimate the respective light beams L1 having been transmitted through the anterior cylindrical lens 8. In the present embodiment, since there is adopted the structure in which the direction of the generating line 8M of the anterior cylindrical lens 8 and the direction of each of the generating lines 12M of the cylindrical lenses 12 are perpendicular to each other, the moving structure of each of the lenses can be simplified.

The cylindrical lenses 12 are each disposed on the elevating support section 40 so that the rear surface 12b (the rear surface) faces the cylindrical surface 8a of the anterior cylindrical lens 8.

In the present embodiment, the cylindrical lenses 12 are installed to the elevating support section 40 in a state in which the distance from the anterior cylindrical lens 8 is held in a predetermined distance via the spacer member 32, although the spacer member 32 is not essential. In other words, the rear surfaces 12b of the cylindrical lenses 12 have contact with the spacer member 32. Further, the side surface of each of the cylindrical lenses 12 forms the flat installation surface 12c, and the installation surfaces 12c are installed on the elevating support section 40.

The elevating support section 40 is a member having a quadrangular prism shape having a square or rectangular cross-sectional shape in the X-Z plane, and is attached with the drive mechanism 50 on an end portion in the +Y direction. The drive mechanism 50 moves the elevating support section 40 up and down in the vertical direction (the Z direction) along a side surface 22b of the second base 22 parallel to the Z-Y plane. The control device 200 controls drive of the drive mechanism 50.

Specifically, the cylindrical lenses 12 are movable along the generating lines 12M in the state in which the installation surfaces 12c have contact with the upper surface 40a of the elevating support section 40.

The cylindrical lenses 12 move in the state of being opposed to the solid-state light sources 2a. Further, the rear surfaces 12b of the cylindrical lenses 12 are disposed along the vertical direction. Further, the rear surfaces 12b of the cylindrical lenses 12 are arranged to have contact with the spacer member 32 when moving. Therefore, the cylindrical lenses 12 are movable in the state in which the distance in the X direction from the anterior cylindrical lens 8 is kept.

As described above, the light source unit 10A according to the present embodiment is capable of surely converting the light beams L1 emitted from the respective solid-state light sources 2a into the parallel light beam using the collimator optical system 3 including two types of cylindrical lenses.

Further, in the present embodiment, as shown in Fig. 8B, a light receiving sensor 42 capable of receiving a part of the light beams L1 and a half mirror 43 for reflecting the light beams L1 toward the light receiving sensor 42 are disposed in a path of the light beams L1 emitted from the anterior cylindrical lens 8. The light receiving sensor 42 detects the luminance of the light beams L1, and then transmits the detection result to the control device 200. The control device 200 controls drive of the drive mechanisms 50, 51 based on the detection result of the light receiving sensor 42.

In the illumination device 101RA adopting the solid-state light sources 2a for emitting laser beams, the light dust collection due to the laser beams occurs. Therefore, foreign matters (e.g., trashes or dust) are attracted in the area high in the light density of the light beams L1. Thus, dirt adheres to the anterior cylindrical lens 8 and each of the cylindrical lenses 12 constituting the collimator optical system 3. Then, the transmittance in the collimator optical system 3 drops, and there is a possibility of causing a problem that the image quality is degraded.

In contrast, according to the present embodiment, in the light source unit 10A, at least one of the anterior cylindrical lens 8 and the cylindrical lenses 12 is movable in the direction of the generating line (8M or 12M).

Hereinafter, the operation of the light source unit 10A will mainly be explained.

In the present embodiment, the control device 200 occasionally monitors the luminance variation of the light beams L1 based on the detection result of the light receiving sensor 42. The control device 200 drives the drive mechanisms 50, 51 at a timing when the luminance of the light beams L1 drops to a predetermined threshold value.

For example, as shown in Fig. 10A, the control device 200 drives the drive mechanisms 50, 51 in the case in which the luminance of the light beams L1 drops to a level of 90 % of a predetermined luminance. It should be noted that in the case in which a necessity of driving the drive mechanisms arises, the control device 200 drives the drive mechanisms 50, 51 in reality when starting or terminating the start-up of the solid-state light sources 2a.

For example, as shown in Fig. 9B, the drive mechanism 50 moves the elevating support section 40, for example, upward to thereby move the cylindrical lenses 12 upward (in the +Z direction). Meanwhile, the drive mechanism 51 (see Fig. 8A) moves the anterior cylindrical lens 8 in, for example, the +Y direction.

Here, since the anterior cylindrical lens 8 exerts the lens effect only in the X-Z plane, it is not necessary to consider the alignment with respect to the solid-state light sources 2a in the Y direction. Therefore, even in the case in which the anterior cylindrical lens 8 moves in the +Y direction, there is no chance of preventing the light beams L1 from being collimated.

Further, since the cylindrical lenses 12 each exert the lens effect only in the X-Y plane, it is not necessary to consider the alignment with respect to the solid-state light sources 2a in the Z direction. Further, in the present embodiment, the cylindrical lenses 12 move in the state in which the distance from the anterior cylindrical lens 8 is held in a predetermined distance via the spacer member 32. Further, in the present embodiment, the side surface 22b of the second base 22 and the end surface of the spacer member 32 are made coplanar with each other. Therefore, the cylindrical lenses 12 move in the state in which the distance from the anterior cylindrical lens 8 is surely kept. Therefore, even in the case in which the cylindrical lenses 12 move upward, there is no chance of preventing the light beams L1 from being collimated.

Due to the movement of the anterior cylindrical lens 8 and the cylindrical lenses 12, the incident positions of the light beams L1 with respect to the respective lenses change. Therefore, a part of the lens not affected by the light dust collection, namely a part without dirt, is disposed on the optical axis of each of the light beams L1. As a result, as shown in Fig. 10A, the luminance can be restored again to the initial value (100 %).

The sizes of the anterior cylindrical lens 8 and the cylindrical lenses 12 have limitations. Therefore, the control device 200 reciprocates the anterior cylindrical lens 8 and the cylindrical lenses 12. On this occasion, in the case in which the dirty part of the anterior cylindrical lens 8 or the dirty part of each of the cylindrical lenses 12 is disposed again on the light path of the light beam L1, the luminance has already dropped to the level 90 % as high as the predetermined luminance due to the light dust collection. Therefore, in the following operation, the control device 200 drives the drive mechanisms 50, 51 at a timing when the luminance of the light beams L1 drops from 90 % to 80 %. As a result, as shown in Fig. 10A, the luminance can be restored again to 90 %. Similarly, even in the case in which the control device 200 drives the drive mechanisms 50, 51, the luminance which can be restored becomes lower as the drive time t(s) of the solid-state light sources 2a increases. Therefore, it is also possible for the control device 200 to generate a signal indicating the maintenance or the replacement of the collimator optical system 3 in the case in which, for example, the restored luminance is lower than 50 %.

According to this configuration, due to the movement of the anterior cylindrical lens 8 and the cylindrical lenses 12, the failure (drop of the luminance) due to the light dust collection can be inhibited from occurring, and thus, the time when the transmittance drops to a reference level for the maintenance or the lens replacement can be extended. As a result, the product life of the illumination devices 101BA, 101GA, and 101RA, or the maintenance cycle thereof can be extended.

Further, if the transmittance varies with movement of the lens, the variation in the transmittance is recognized by the user, and there is a possibility of providing uncomfortable feeling to the user. In contrast, in the present embodiment, since the drive mechanisms 50, 51 are driven when starting or terminating the start-up of the solid-state light sources 2a, there is no chance of making the user recognize the variation in transmittance, and thus, the uncomfortable feeling can be prevented from being provided to the user.

As described hereinabove, according to the projector 100A related to the present embodiment, since the illumination devices 101RA, 101GA, and 101BA described above are provided, there can be obtained not only the advantages, which can be obtained in the projector 100 according to the first embodiment, but also an advantage of inhibiting the failure due to the light dust collection from occurring. Therefore, the projector 100A is capable of performing the display high in reliability and superior in image quality.

Although in the present embodiment, there is cited as an example the case of disposing the light receiving sensor 42 only in the posterior stage of the anterior cylindrical lens 8, it is also possible for the light receiving sensor 42 to be disposed in the posterior stage of one or more of the cylindrical lenses 12. Alternatively, it is also possible to dispose the light receiving sensors 42 respectively in the anterior cylindrical lens 8 and the posterior stage of the cylindrical lenses 12. In this case, it is also possible for the control device 200 to differ the drive state between the drive mechanisms 50, 51 based on the light receiving result of each of the light receiving sensors 42. In other words, it is also possible for the control device 200 to drive at least one of the drive mechanisms 50, 51. Alternatively, it is also possible for the control device 200 to set the drive speed of one of the drive mechanisms 50, 51 to be relatively low, and to set the drive speed of the other of the drive mechanisms 50, 51 to be relatively high. Further, although in the present embodiment, there is cited as the example the case in which the plurality of cylindrical lenses 12 moves as a unit, it is also possible to adopt a configuration in which the cylindrical lenses 12 can move independently of each other.

Further, the moving method of each of the lenses is not limited to the configuration described above. For example, it is also possible for the control device 200 to always drive at least either one of the drive mechanisms 50, 51 when driving the solid-state light sources 2a. In this case, since the anterior cylindrical lens 8 and the cylindrical lenses 12 always move while driving the solid-state light sources 2a, the amount of dirt adhering to each of the lenses due to the light dust collection is reduced. As a result, as shown in Fig. 10B, the speed at which the luminance of the light beams L1 drops over time can be decreased, the failure (drop of the luminance) due to the light dust collection can be inhibited from occurring, and thus, the time when the transmittance drops to a reference level for the maintenance or the lens replacement can be extended. Therefore, the product life of the illumination devices 101BA, 101GA, and 101RA, or the maintenance cycle thereof can be extended.

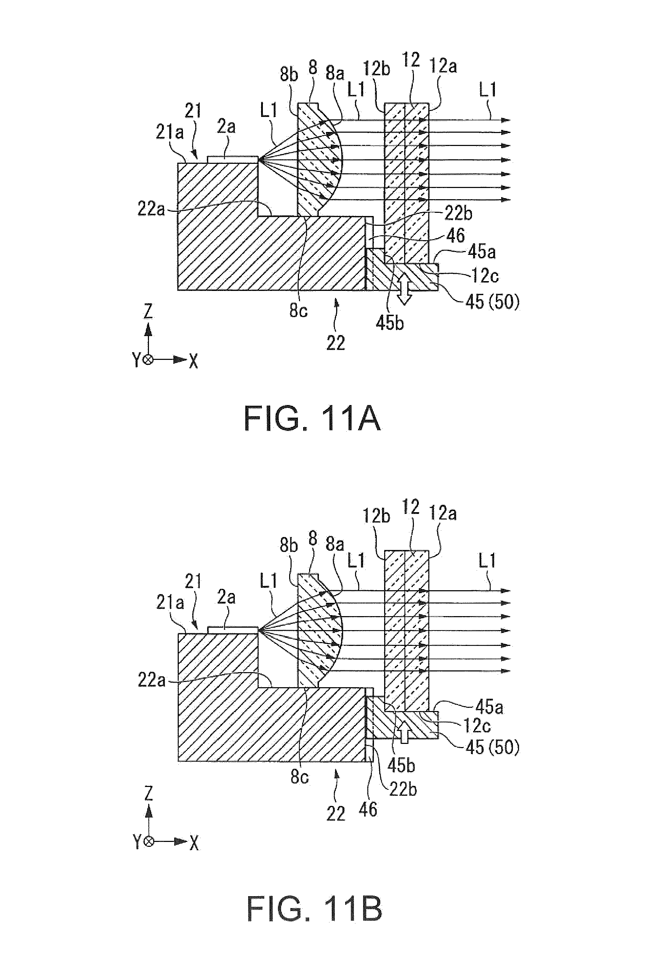

Further, although in the embodiment described above, the spacer member 32 is used for defining the distance between the anterior cylindrical lens 8 and the cylindrical lenses 12, the invention is not limited to this configuration. For example, as shown in Fig. 11A, it is also possible to arrange that the elevating support section 45 for moving the cylindrical lenses 12 supports the rear surfaces 12b of the cylindrical lenses 12 by itself to thereby define the distance to the anterior cylindrical lens 8 without using the spacer member.

The elevating support section 45 is movable in the vertical direction (the Z direction) along a guide rail 46 disposed on the side surface 22b of the second base 22. The elevating support section 45 can be moved up and down by the drive mechanism 50 similarly to the embodiment described above. It should be noted that it is also possible to provide a groove to the side surface 22b instead of the guide rail 46, and to arrange that the cylindrical lenses 12 are moved by being fitted into the groove.

The elevating support section 45 has a support surface 45a for supporting the installation surface 12c of each of the cylindrical lenses 12, and a side surface 45b perpendicular to the support surface 45a, and for supporting the rear surface 12b of each of the cylindrical lenses 12. The support surface 45a and the side surface 45b are perpendicular to each other. Since the two surfaces are supported by the elevating support section 45, the cylindrical lenses 12 are each positioned with respect to the elevating support section 45. The cylindrical lenses 12 each have the rear surface 12b arranged to be perpendicular to the support surface 45a of the elevating support section 45.

Since the elevating support section 45 is attached to the second base 22 via the guide rail 46, even in the case in which the cylindrical lenses 12 rise due to the elevating operation as shown in Fig. 11B, the distance between the cylindrical lenses 12 and the anterior cylindrical lens 8 is kept.

As described above, according to the configuration related to the present modified example, the lenses can be moved in the state of keeping the distance between the anterior cylindrical lens 8 and the cylindrical lenses 12 without using the spacer member. Again, individual elevation support sections 45 may be provided for respective cylindrical lenses 12 or groups of them.

The invention is not necessarily limited to the embodiments described above, but a variety of modifications can be added thereto within the scope of the invention as defined in the appended claims.

Further, although in the embodiments described above, there is cited as an example the projector 100 provided with the three light modulation devices 102R, 102G, and 102B, the invention can also be applied to a projector for displaying a color image (an image) using a single light modulation device. Further, the light modulation device is not limited to the liquid crystal panel described above, but a digital mirror device, for example, can also be used.

Further, although in the embodiments described above, the surface-relief hologram element is used as the diffractive-optical element 6, a volume hologram element can also be used. Further, it is also possible to use a composite hologram element combining the surface-relief hologram and the volume hologram with each other.

## Claims

1. A light source device (10) comprising:
a plurality of light sources (2) arranged in a first direction (Y);
a first cylindrical lens (8), which light beams from the plurality of light sources enter;
a lens unit (9), which light beams from the first cylindrical lens enter;
a support member (22) adapted to support the lens unit; and
a guide section (32) provided to the support member,
wherein a generating line (8M) of the first cylindrical lens is parallel to the first direction,
the lens unit is provided with a plurality of cylindrical lenses (12) disposed so as to correspond respectively to the plurality of light sources,
a generating line (12M) of each of the plurality of cylindrical lenses intersects with the first direction,
the plurality of light sources includes a first light emitting element (2a),
the plurality of cylindrical lenses includes a second cylindrical lens corresponding to the first light emitting element, and
the second cylindrical lens is disposed so as to correspond to an arrangement of the first light emitting element independently of one of the plurality of cylindrical lenses adjacent to the second cylindrical lens.

2. The light source device according to Claim 1, wherein
a maximum radiation angle direction (W2) of the light beam emitted from each of the light sources intersects with the first direction (Y).

3. The light source device according to Claim 1 or Claim 2, wherein
the second cylindrical lens has a first flat surface (12c) perpendicular to a lens surface of the second cylindrical lens, and
the second cylindrical lens is supported by the support member via the first flat surface.

4. The light source device according to any one of the preceding claims, wherein
the second cylindrical lens has a second flat surface (12b) opposed to the lens surface (12a) of the second cylindrical lens, and
the second flat surface has contact with the guide section.

5. The light source device according to Claim 4, wherein
the second flat surface (12b) is opposed to the first cylindrical lens (8).

6. The light source device according to any one of the preceding claims, wherein
the guide section (32) defines a distance between the first cylindrical lens and the lens unit.

7. The light source device according to any one of the preceding claims, further comprising:
a first plane (21a) adapted to support the plurality of light sources,
wherein the generating line (8M) of the first cylindrical lens is parallel to the first plane.

8. The light source device according to Claim 7, wherein
the support member has a second plane (22a) adapted to support the lens unit (9), and
the first plane (21a) is parallel to the second plane (22a).

9. The light source device according to any one of the preceding claims, wherein
at least one of the first cylindrical lens and the second cylindrical lens is movable in a direction of a corresponding generating line.

10. A projector comprising:
an illumination device (101) adapted to emit illumination light;
a light modulation device (102) adapted to modulate the illumination light in accordance with image information to form image light; and
a projection optical system (104) adapted to project the image light,
wherein the light source device (10) according to any one of the preceding claims is used for the illumination device.
